# EUROPÄISCHE PATENTANMELDUNG

(11) **EP 4 636 228 A1**
(43) Veröffentlichungstag der Anmeldung: **22.10.2025**
(21) Anmeldenummer: 24171298.3
(22) Anmeldetag: 19.04.2024
(51) Int. Cl.: F01D 25/28, B33Y 80/00, B63H 21/30, F02C 7/20, F16M 1/04, F16M 5/00

(54) **ADDITIVE FERTIGUNG BEI METALL-UNTERGESTELLEN FÜR ANLAGEN**

(71) Anmelder: TGM Kanis Turbinen GmbH, 90475 Nürnberg (DE)
(72) Erfinder: Jany, David, 91367 Weißenohe (DE); Pretel, Gösta, 93133 Burglengenfeld (DE); Kamm, Alexander, 90461 Nürnberg (DE)
(74) Vertreter: Kanzlei Dr. Negendanck Patentmanufaktur

(57) **Zusammenfassung**

Ein Untergestell (6) für eine Anlage (2) enthält Gestellkomponenten (8a-e) aus metallischem Material, wobei wenigstens eine der Gestellkomponenten (8a-e) wenigstens einen Additivabschnitt (10) enthält, der zumindest teilweise anhand eines additiven Fertigungsverfahrens hergestellt ist, wobei wenigstens einer der Additivabschnitte (10) einen Rahmen (12) und eine additiv gefertigte Füllstruktur (20) aufweist, die mit dem Rahmen (12) dauerhaft und fest verbunden ist, und die einen Freiraum (18) durchsetzt.

Eine Anlage (2) enthält das Untergestell (6) und Anlagenkomponenten (4a-c), die in einem Montagezustand fest und dauerhaft an dem Untergestell (6) angebracht sind.

Bei einem Verfahren zum Herstellen des Untergestells (6) wird bei wenigstens einer der Gestellkomponenten (8a-e) wenigstens ein Additivabschnitt (10) hergestellt, indem die Füllstruktur (20) additiv gefertigt und mit dem Rahmen (12) dauerhaft und fest verbunden wird und dabei den Freiraum (18) durchsetzt.

## Beschreibung

Die Erfindung betrifft ein Metall-Untergestell für eine Anlage.

Im Anlagenbau, Komponentenbau und vielen anderen Bereichen kommen unterschiedlichste Untergestelle für Maschinen und Anlagen zum Einsatz. Diese Untergestelle, egal ob geschweißt, gegossen oder montiert aus Einzelteilen, erfüllen verschiedene Funktionen. Beispielsweise seien aufgeführt: Die Positionssicherung einer oder mehrerer Maschinen, das Aufnehmen statischer und dynamischer Lasten und Momente, das Beinhalten von Öl, Wasser, Kühlschmiermittel und anderen Stoffen, welche den Maschinen auf oder an dem Untergestell zugeführt werden können.

Aus der EP 0 065 413 A2 ist ein Gestell bekannt, das sich besonders zum Tragen rotierender Maschinen in Umgebungen eignet, in denen sie Temperaturschwankungen und äußeren mechanischen Kräften ausgesetzt sind und in denen ein Ausfall der Maschine zur Erzeugung eines extrem hohen Drehmoments führen kann, das absorbiert werden muss. Das Gestell enthält im Wesentlichen eine Maschinenstützplattform, die mit einem länglichen Torsionswiderstandselement in Drehmomentübertragungsbeziehung verbunden ist, und nur drei beabstandete Stützelemente, die jeweils ein Universalgelenk enthalten und starr mit dem Torsionswiderstandselement verbunden sind. Das Torsionswiderstandselement hat vorzugsweise über seine gesamte Länge einen hohlen kreisförmigen Querschnitt und ist unterhalb der mittleren Mittellinie der Stützplattform angeordnet und die drei Stützelemente sind an den Ecken eines gleichschenkligen Dreiecks angeordnet und enthalten Mittel, die eine begrenzte Bewegung des Torsionswiderstandselements relativ dazu erlauben.

Der Erfindung liegt die Aufgabe zugrunde, Verbesserungen im Hinblick auf Metall-Untergestelle für Anlagen vorzuschlagen.

Die Aufgabe wird gelöst durch ein Untergestell gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Untergestell ist ein solches für eine Anlage. Der Begriff "Anlage" ist hier weit zu verstehen und steht für Anlagen, Maschinen, Maschinengruppen, Vorrichtungen für den Komponentenbau usw., z.B. eine Kraftwerksanlage zur Energiegewinnung usw. Die Anlage weist dabei wenigstens eine Anlagenkomponente auf, z.B. eine Turbine, einen Generator, einen Schaltschrank, eine Pumpe usw. Das Untergestell ist dazu bestimmt bzw. eingerichtet, dass zumindest in einem Montagezustand der Anlage bzw. des Untergestells wenigstens eine Anlagenkomponente der Anlage fest und dauerhaft an dem Untergestell angebracht oder auf diesem aufgestellt ist. Z.B. ist ein Getriebe als Anlagenkomponenten fest und dauerhaft an dem Untergestell angebracht, nämlich fest verschraubt. Alternativ oder zusätzlich ist z.B. eine Turbine und ein Generator auf dem Untergestellt zwar auch fest und dauerhaft angeordnet, jedoch nur aufgestellt, z.B. ohne feste Verschraubung.

Der Montagezustand beschreibt denjenigen Zustand des Untergestells bzw. der Anlage, in dem sämtliche geplanten bzw. beabsichtigten Anlagenkomponenten der Anlage an dem Untergestell angebracht sind und somit das Untergestell mit den Anlagenkomponenten endgefertigt ist. Insbesondere ist die Anlage mit dem Untergestell dann betriebsbereit oder befindet sich bereits im Betrieb.

Das Untergestell enthält wenigstens eine Gestellkomponente. Jede der Gestellkomponenten ist aus wenigstens einem metallischen Material gefertigt. Insbesondere ist wenigstens eines der Materialien schweißbar, um die betreffende Gestellkomponente durch Schweißen mit weiteren Gegenständen, zum Beispiel weiteren Gestellkomponenten zu verschweißen.

Wenigstens eine der Gestellkomponenten enthält wenigstens einen Additivabschnitt. Eine Gestellkomponente kann also auch mehrere Additivabschnitte enthalten. "Wenigstens enthalten" kann auch bedeuten, dass die gesamte Gestellkomponente ausschließlich aus Additivabschnitten, insbesondere auch aus einem einzigen Additivabschnitt besteht. Mit anderen Worten entartet dann der Additivabschnitt zur Gestellkomponente.

Der Additivabschnitt ist bzw. wird zumindest teilweise anhand eines additiven Fertigungsverfahrens hergestellt, insbesondere aus wenigstens einem der metallischen Materialien der Gestellkomponente.

Wenigstens einer der Additivabschnitte enthält dabei einen Rahmen, einen Freiraum und eine Füllstruktur wie folgt:
Ausschließlich der Rahmen stellt eine mechanische Schnittstelle des betreffenden Additivabschnitts zum restlichen Untergestell dar. Mit anderen Worten ist der Additivabschnitt ausschließlich über den Rahmen mit der restlichen Gestellkomponente oder einem weiteren Bestandteil des Untergestells mechanisch verbunden.

Die Füllstruktur ist bzw. wird additiv gefertigt. Die Füllstruktur ist mit dem Rahmen dauerhaft und fest verbunden. Somit ist sie nur mittelbar über den Rahmen mit der restlichen Gestellkomponente oder einem weiteren Bestandteil des Untergestells mechanisch verbunden. Die Füllstruktur durchsetzt den Freiraum. Dabei kann der Freiraum auch mehrteilig ausgeführt sein. Mit anderen Worten kann der Freiraum durch die Füllstruktur gegebenenfalls in voneinander getrennte Abschnitte geteilt sein / werden. Mit anderen Worten ist die Füllstruktur also zumindest teilweise von den Freiräumen bzw. den Abschnitten des Freiraumes umgeben.

Der "Rahmen" ist hier ebenfalls weit zu verstehen. Der Rahmen muss kein separates bzw. eigenständiges Bauteil oder Bauelement oder Konstruktionselement sein. Auch ein Teil einer sonstigen Komponente des Untergestells, zum Beispiel die Oberfläche bzw. "Randschicht" eines massiven Bauteils kann als Rahmen verstanden werden bzw. fungieren. Das Bauteil dient dann in einer Doppelfunktionalität als Untergrund (und in diesem Sinne als Rahmen) für die additive Aufbringung bzw. Auffertigung (z.B. Aufdrucken) der Füllstruktur anhand des additiven Fertigungsverfahrens.

Gemäß der Erfindung werden also insbesondere metallische Strukturen, nämlich die Füllstruktur, einschließlich deren Rahmen als Additivabschnitte in (zumindest teilweise) metallische Untergestelle für Maschinen und Anlagen integriert. Die Füllstrukturen sind bzw. werden dabei durch additive Verfahren hergestellt. Durch die Integration der Additivabschnitte bzw. Füllstrukturen in das Untergestell werden dem Untergestell anwendungsspezifische optimierte mechanische Eigenschaften zugetragen.

Dank der Erfindung lässt sich - im Vergleich zu aus der Praxis bekannten, herkömmlichen Konstruktionen ohne entsprechende Additivabschnitte bzw. Füllstrukturen - im Untergestell Material einsparen und Gewicht reduzieren, während statische und dynamische Kräfte und Momente besser aufgenommen werden können. Durch Wahl der richtigen Struktur (Füllstruktur) lassen sich Spannungsspitzen in der Unterkonstruktion (Untergestell) reduzieren. Auch für die dynamische Betrachtung lässt sich das Verhalten der Unterkonstruktion (Untergestell) besser steuern.

In einer bevorzugten Ausführungsform ist bei wenigstens einer der Füllstrukturen zumindest ein Teil der, insbesondere die gesamte, Füllstruktur in Form von Stegen (der Begriff "Steg" ist hier weit zu verstehen und meint Stege, Streben, Brücken, Leisten, ...) ausgeführt. Die entsprechenden Stege durchsetzen also den Freiraum. So können sich Füllstrukturen in Form von Waben, Gitter, Fachwerk oder sogenannten bionische Strukturen (Elemente der sogenannten "Strukturbionik", siehe z.B. Wikipedia: 'Strukturbionik', "https:// de. wikipedia. org/ wiki/ Strukturbionik", Internetseite, Abruf am 05.03.2024) ergeben. Die Füllstrukturen können dabei zweidimensional ausgetragen oder dreidimensional komplex gestaltet sein. Derartige Füllstrukturen können besonders mechanisch stabil und gleichzeitig leicht anhand additiver Fertigungsverfahren ausgeführt werden.

In einer bevorzugten Ausführungsform ist bei wenigstens einer der Füllstrukturen zumindest ein Teil der Füllstruktur durch regelmäßig aneinandergereihte wiederkehrende Strukturelemente gebildet. Mit anderen Worten werden zum Beispiel gleichartige Waben, Zellen, Stege, Streben usw. in einer regelmäßigen Struktur periodisch, eindimensional, zweidimensional oder dreidimensional wiederholt aneinandergereiht. So können z.B. ausgedehnte regelmäßige Wabenanordnungen, Gitteranordnungen, Fachwerke usw. entstehen und zumindest einen Abschnitt einer Füllstruktur bilden. Bei den Strukturelementen (Zellen, Grundstruktur) kann es sich um Standardstrukturen handeln, die für mehrere verschiedene Anlagen gleichartig genutzt werden oder aber auch um Strukturelemente, welche für eine spezielle Anlage individuell konstruiert bzw. geschaffen werden, um den speziellen Anforderungen einer bestimmten Anlage bzw. eines bestimmten Untergestells gerecht zu werden. Durch derartige regelmäßig aneinandergereihte wiederkehrende Strukturelemente lässt sich eine Füllstruktur besonders einfach herstellen.

In einer bevorzugten Ausführungsform wird bzw. ist bei wenigstens einem der Additivabschnitte wenigstens ein Teil des Rahmens (z.B. bestimmte Rahmenabschnitte) additiv gefertigt. Somit kann auch der betreffende Teil des Rahmens oder der gesamte Rahmen besonders einfach und insbesondere zusammen mit der Füllstruktur additiv gefertigt werden.

In einer bevorzugten Ausführungsform ist bei wenigstens einem der Additivabschnitte wenigstens ein Teil des Rahmens nicht additiv gefertigt. Somit kann für den betreffenden (Teil des) Rahmen auf klassische Fertigungsmethoden oder vorgefertigte Rahmen wie zum Beispiel Bleche, Platten, oder sonstige nicht additiv gefertigte Elemente zurückgegriffen werden, ohne dass der betreffende Teil des Rahmens additiv gefertigt werden muss. Dies kann zu Zeit- und Kostenvorteilen bei der Herstellung des Additivabschnittes führen.

In einer bevorzugten Ausführungsform ist bzw. wird bei wenigstens einem der Additivabschnitte wenigstens eine der Füllstrukturen auf einem bereits vorab bestehenden Rahmen additiv aufgefertigt. "Vorab bestehend" ist so zu verstehen, dass der betreffende Rahmen bereits fertiggestellt vorliegt, bevor mit der additiven Fertigung der Füllstruktur bzw. deren Verbindung mit dem Rahmen begonnen wird. Insbesondere wird also die Füllstruktur auf einen bestehenden Untergrund in Form des Rahmens aufgefertigt, z.B. aufgedruckt.

Mit anderen Worten wird hier bei der Herstellung der Füllstruktur zunächst ein bestehender Teil / Abschnitt des Untergestells geschaffen, der dann den Rahmen für den Additivabschnitt bildet. Erst dann wird die Füllstruktur auf diesem Element als Rahmen additiv aufgefertigt. Anschließend wird dann das Untergestell weiter gefertigt, falls dieses nach Fertigung der Füllstruktur noch nicht fertiggestellt ist. Durch die Nutzung vorgefertigter Rahmen bzw. vorgefertigter Elemente als Rahmen wird die Fertigung des Untergestells insgesamt vereinfacht.

In einer bevorzugten Ausführungsform enthält das Untergestell wenigstens zwei Gestellkomponenten. Die beiden Gestellkomponenten sind wenigstens in dem Montagezustand miteinander verbunden. Insbesondere sind diese fest, alternativ oder zusätzlich insbesondere unlösbar, alternativ auch lösbar miteinander verbunden. So können Untergestelle durch modularen Aufbau von Gestellkomponenten besonders günstig geschaffen werden.

In einer bevorzugten Variante dieser Ausführungsform ist wenigstens einer der Additivabschnitte zumindest im Montagezustand als eine Versteifung und / oder Verbindung zwischen wenigstens zweien der Gestellkomponenten ausgeführt. Mit anderen Worten sind die in Rede stehenden Gestellkomponenten durch den Additivabschnitt miteinander verbunden oder relativ zueinander hinsichtlich ihrer konstruktiven Ausgestaltung bzw. statischer/dynamischer Kräfte und Momente usw. versteift. Gemäß der oben eingeführten Nomenklatur gehört der betreffende Additivabschnitt einer der Gestellkomponenten an. Dies ist jedoch im Fall mehrerer Gestellkomponenten nur noch insofern formal zu verstehen, dass tatsächlich der Additivabschnitt eine an sich eigenständige Komponente im Untergestell darstellen kann und somit zwei ebenfalls eigenständige Gestellkomponenten miteinander verbinden oder versteifen kann, ohne einer bestimmten der Gestellkomponenten zugeordnet sein zu müssen. Mit anderen Worten kann der Additivabschnitt auch zum Beispiel nachträglich zwischen den beiden Gestellkomponenten angebracht werden, indem Teile der Gestellkomponenten bzw. Teile von deren Oberflächen als Rahmen für die Füllstruktur dienen, auf dem diese dann aufgefertigt wird.

In einer bevorzugten Ausführungsform weist wenigstens eine der Gestellkomponenten wenigstens einen Klassikabschnitt auf, der nicht anhand eines additiven Fertigungsverfahrens hergestellt ist. Mit anderen Worten können so auch (zumindest teilweise) klassisch gefertigte Gestellkomponenten in das Untergestell integriert werden. Diese sind dann klassisch, zum Beispiel durch Schweißen, Gießen, klassische Metallbearbeitung (Fräsen, Bohren, Biegen, usw.) hergestellt.

In einer bevorzugten Ausführungsform enthält wenigstens eine der Gestellkomponenten wenigstens ein Medienbehältnis. Das Medienbehältnis weist einen Medienraum auf. Der Medienraum ist zumindest im Montagezustand des Untergestells bzw. der Anlage mit einem Medium befüllbar. Das Medienbehältnis stellt somit eine Anlagenkomponente der Anlage dar, der Medienraum ist insbesondere ein Hohlraum. Entsprechende Medien sind zum Beispiel Öl, Wasser, Kühlschmiermittel usw., die im Rahmen der Anlage bzw. des Betriebs der Anlage benötigt oder vorgehalten werden. Medienbehältnisse können z.B. Strömungskanäle, Tankräume, Wannen, Aufnahmetrichter, Ausgabedüsen usw. sein. Somit lassen sich Untergestelle realisieren, die auch eine entsprechende Medienfunktionalität aufweisen.

In einer bevorzugten Variante dieser Ausführungsform ist wenigstens einer der Medienräume zumindest teilweise mit wenigstens einer der Füllstrukturen gefüllt. Insbesondere stellt zumindest ein Teil einer Wand des betreffenden Medienraumes zumindest einen Teil des Rahmens für wenigstens eine der betreffenden Füllstrukturen dar. Zumindest ein Teil der Wand des Medienraumes kann aber auch durch Elemente der Füllstruktur, z.B. Wände/ Stege, etc. gebildet sein. Somit lassen sich die oben genannten Vorteile der Füllstrukturen auch auf Medienräume bzw. Medienbehältnisse erweitern. Beispielsweise wird so der Medienraum in Form eines Tankinnenraums eines Medientanks als Medienbehältnis in der Anlage durch innenliegende, additiv gefertigte Stege oder Wände mechanisch stabilisiert und ggf. auch zumindest teilweise gebildet.

Die Aufgabe der Erfindung wird auch gelöst durch die oben bereits erläuterte Anlage gemäß Patentanspruch 12. Die Anlage enthält das oben erläuterte erfindungsgemäße Untergestell und die oben erläuterte wenigstens eine Anlagekomponente. Wenigstens in dem Montagezustand der Anlage ist wenigstens eine der Anlagenkomponenten fest und dauerhaft an dem Untergestell angebracht.

Dank des Untergestells gelten für die Anlage die oben im Zusammenhang mit dem Untergestell genannten Vorteile.

Die Anlage und zumindest ein Teil deren möglicher Ausführungsformen sowie die jeweiligen Vorteile wurden sinngemäß bereits im Zusammenhang mit dem erfindungsgemäßen Untergestell erläutert. Insbesondere bilden also die oben im Zusammenhang mit dem Untergestell genannten bevorzugten Ausführungsformen auch bevorzugte Ausführungsformen der Anlage.

Die Aufgabe der Erfindung wird auch gelöst durch ein Verfahren gemäß Patentanspruch 13. Dieses dient zum Herstellen des oben erläuterten erfindungsgemäßen Untergestells.

Bei dem Verfahren wird - wie oben erläutert - die wenigstens eine Gestellkomponente bereitgestellt. Dabei wird jede der Gestellkomponenten aus dem wenigstens einen bzw. einem oben genannten metallischen Material gefertigt. Dabei wird bei wenigstens einer der Gestellkomponenten wenigstens ein Additivabschnitt dieser Gestellkomponente derart hergestellt bzw. angefertigt, dass dieser zumindest teilweise anhand eines additiven Fertigungsverfahrens hergestellt wird. Dabei wird bei wenigstens einem der Additivabschnitte bzw. für einen der Additivabschnitte der Rahmen und der Freiraum bereitgestellt und die Füllstruktur additiv gefertigt und mit dem Rahmen dauerhaft und fest verbunden. Die Füllstruktur wird dabei derart additiv gefertigt, dass sie den Freiraum durchsetzt.

Das Verfahren und zumindest ein Teil dessen möglicher Ausführungsformen sowie die jeweiligen Vorteile wurden sinngemäß bereits im Zusammenhang mit dem erfindungsgemäßen Untergestell oder der erfindungsgemäßen Anlage erläutert. Insbesondere bilden also die oben im Zusammenhang mit dem Untergestell oder der Anlage genannten bevorzugten Ausführungsformen auch bevorzugte Ausführungsformen des Verfahrens.

Beispiele hierfür sind z.B., dass bei wenigstens einer der Füllstrukturen zumindest ein Teil der Füllstruktur in Form von Stegen ausgeführt wird. Die entsprechenden Verfahrensvarianten werden hier nicht nochmals explizit wiederholt.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung beruht auf der Beobachtung aus der Praxis, dass in der Regel die bekannten Untergestelle ein großes anwendungsspezifisches Optimierungspotential bieten, da in der bisherigen Praxis auf eine herkömmliche Fertigung (also keine additiven Fertigungsmethoden) zurückgegriffen wird.

Die Erfindung beruht daher auf folgenden Ideen:
Füllstrukturen werden auf einer Unterlage lösbar oder unlösbar aufgedruckt. Die Füllstrukturen können aber auch direkt auf Gestellkomponenten, wie z.B. unterschiedliche bereits verbundene, oder unverbundene Halbzeuge, Träger, Bleche oder ähnlichem aufgebracht werden, die zum Untergestell dazugehören. So ist es auch möglich, offene Bereiche, Hohlstellen, Zwischenräume und Ecken mit Füllstruktur zu füllen oder zu versteifen. Des Weiteren können im Untergestell Medienbehältnisse, die Gas, Flüssigkeit oder Festkörper aufnehmen können, mit Füllstruktur gefüllt, oder versteift werden.

Die Unterstruktur (also das Untergestell) kann aus mehreren Teilen (Gestellkomponenten) bestehen, welche nicht miteinander verbunden sind. Aber auch eine Teilfertigung von kleineren Segmenten (Gestellkomponenten), welche später zu einem großen Rahmen (Untergestell oder dessen Teil) zusammengefügt werden, ist möglich.

Nachdem die Füllstruktur gefertigt wurde, können weitere Elemente (Gestellkomponenten / Rahmen), wie zum Beispiel Deckbleche, Laschen und alle weiteren nicht gedruckten Strukturen oder separat gedruckte metallische Strukturen ergänzt, bzw. angebracht werden.

Die Füllstrukturen, die zur Anwendung kommen, können zweidimensional ausgetragen oder dreidimensional komplex sein.

Gemäß der Erfindung ergeben sich strukturierte Metall-Untergestelle bzw. metallische Untergestelle für Maschinen und Anlagen.

Grundidee der Erfindung ist die Herstellung von zumindest Teilen der Untergestelle mittels kommerziell erhältlicher / fachüblich verfügbarer additiver Verfahren, unter Einsatz von schweißbaren metallischen Ausgangswerkstoffen. Es werden (Füll-)Strukturen erzeugt, welche durch gerichteten strukturellen Aufbau optimierte, mechanische Eigenschaften aufweisen.

Die additiv hergestellten Strukturen können versteifend und verbindend zwischen verbundenen, unverbundenen oder löslich verbundenen Halbzeugen, Trägern, Blechen, Flanschen oder Ähnlichem (Gestellkomponenten und Teil hiervon) verwendet werden.

Die (Füll-)Strukturen, die in den Untergestellen zur Anwendung kommen, werden durch die vielfältigen additiven Fertigungsverfahren, geometrisch nicht auf bestimmte Muster und Formen eingegrenzt, weshalb zweidimensional ausgetragene, oder komplex dreidimensionale Strukturen gleichermaßen zur Anwendung kommen.

Die eingesetzten additiv aufgebrachten (Füll-)Strukturen können bauformspezifisch gleich ausgeführt werden und/oder individuell für den Anwendungsfall optimiert eingesetzt werden.

Das Untergestell kann aus mehreren einzeln gefertigten Teilsegmenten nachträglich lösbar oder unlösbar zusammengesetzt sein bzw. werden.

Eine Hauptstruktur (als eine der Gestellkomponenten) kann durch weitere Elemente, wie etwa separat gedruckte metallische Strukturen oder unterschiedliche Arten von Halbzeugen (in Form weiterer Gestellkomponenten / Additivabschnitten usw.) ergänzt werden. Medienbehältnisse, die Gas, Flüssigkeit oder Festkörper aufnehmen können, können direkt in die Struktur des Untergestells integriert sein bzw. werden.

Die Füllstrukturen können auf einer Unterlage lösbar oder unlösbar aufgefertigt / -gedruckt werden. Im ersten Fall werden die Füllstrukturen dann nach dem Fertigen mit einer Gestellkomponente verbunden bzw. in diese integriert (am Rahmen angebracht).

Gemäß der Erfindung entsteht also ein Untergestell für Maschinen und Anlagen, welches aus beliebig additiv gefertigten (insbesondere gedruckten) metallischen (Füll-)Strukturen besteht, oder mit beliebig additiv gefertigten metallischen (Füll-)Strukturen ergänzt wird, um statische und dynamische Kräfte und Momente aufzunehmen.

Die (Füll-)Struktur im Untergestell ermöglicht durch beliebige Anordnung und Kombination mit herkömmlichen Halbzeugen anwendungsspezifisch optimierte mechanische Eigenschaften. So Strukturierte Metall-Untergestelle sind im Vergleich zu herkömmlichen Untergestellen (ohne additiv gefertigte Anteile) leichter und weisen steifere mechanische Eigenschaften auf.

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: in jeweiligen perspektivischen Ansichten eine Anlage mit einem teilgeöffneten Untergestell,
- Figur 2: ein alternatives Untergestellt in ungeöffneter Darstellung,
- Figur 3: ein weiteres alternatives Untergestell in einem Teilschnitt.

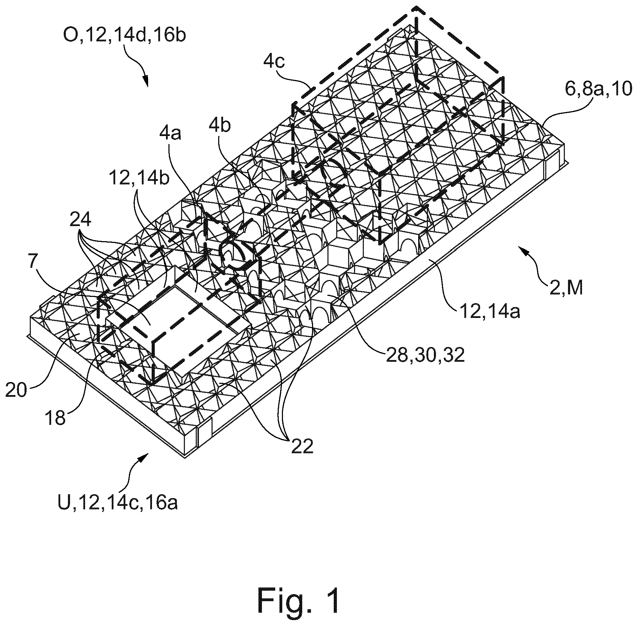

Figur 1 zeigt in stark symbolisierter Darstellung eine Anlage 2, hier eine Energieerzeugungsanlage in einem nicht näher erläuterten Dampfkraftwerk. Die Anlage 2 enthält drei wesentlich Anlagenkomponenten 4a-c, nämlich als Anlagenkomponente 4a eine dampfgetriebene Turbine, als Anlagenkomponente 4b ein Getriebe oder eine Welle und als Anlagenkomponenten 4c einen Generator, welcher mechanisch über das Getriebe oder die Welle von der Dampfturbine angetrieben ist bzw. wird.

Die Anlage 2 enthält außerdem ein Untergestell 6. In dem in Figur 1 dargestellten Montagezustand M der Anlage 2 ist diese vollständig endmontiert und betriebsbereit. Im Montagezustand M sind die Anlagenkomponenten 4a,c (Turbine und Generator) auf dem Untergestell 6 nur aufgestellt, ohne feste Verschraubung. Die Anlagenkomponente 4b (Getriebe) ist fest und dauerhaft an dem Untergestell 6 angebracht, hier fest verschraubt.

Das Untergestell 6 ist bzw. wurde aus einem metallischen Material, hier Stahl, gefertigt, das schweißbar ist. Das Untergestell 6 weist konstruktionstechnisch eine Durchbrechung 7 bzw. einen Ausschnitt auf, durch welchen - nicht näher erläutert - eine Entwässerungs- und Abdampfleitung der Turbine in Form der Anlagenkomponente 4a geführt werden bzw. sind.

Das Untergestell enthält eine Gestellkomponente 8a. Dieses weist einen Additivabschnitt 10 auf. Vorliegend nimmt der Additivabschnitt 10 die gesamte Gestellkomponente 8a ein, diese wieder bildet vollständig das Untergestell 6. Mit anderen Worten ist hier das Untergestell 6 vollständig als Gestellkomponente 8a und diese vollständig als Additivabschnitt 10 ausgeführt.

Der Additivabschnitt 10 weist einen Rahmen auf, der hier in Form einer Umhausung / Außenhülle den Additivabschnitt 10 vollständig umfängt und dessen Rahmen 12 bildet. In der Figur ist ein oberer Deckel 16b der Umhausung (Oberseite O des Untergestells 6) nicht dargestellt bzw. nur in einer Ecke gestrichelt angedeutet.

Der Additivabschnitt 10 bzw. dessen Rahmen 12 ist hier vollständig mit einer Füllstruktur 20 gefüllt, die einen vom Rahmen 12 umschlossenen Freiraum 18 durchsetzt. Der in Figur 1 sichtbare Teil des Additivabschnittes 10 ist anhand eines additiven Fertigungsverfahrens aus dem metallischen Material hergestellt. Der Additivabschnitt 10 weist also einen Rahmen 12 auf. Der Rahmen 12 umfasst den gesamten Additivabschnitt 10 nach allen Seiten, bildet also insbesondere zwei quaderförmige Rahmenabschnitte 14a, b sowie die beiden flachseitigen Deckel 16a, b als Rahmenabschnitte 14c, d, wobei ein Deckel 16a in Figur 1 sich vom Betrachter entfernt an der Unterseite U der Anlage 2 befindet.

Der Deckel 16b ist wie oben erläutert nicht dargestellt, um die innere Struktur des Additivabschnitts 10 sehen zu können.

Der Additivabschnitt 10 weist also den Freiraum 18 auf, der von dem Rahmen 12 umgeben ist. Weiterhin enthält der Additivabschnitt 10 die Füllstruktur 20, die mit dem Rahmen 12 fest und dauerhaft verbunden ist, die ebenfalls aus dem oben genannten Material additiv gefertigt ist und die den Freiraum 18 durchsetzt. Insbesondere teilt sie den Freiraum in eine Vielzahl von einzelnen Teilräumen oder Zellen.

Die Füllstruktur 20 ist hier in Form von Stegen 22 ausgeführt. Durch die Stege 22 sind regelmäßig aneinandergereihte wiederkehrende Strukturelemente 24 geschaffen, hier jeweilige Zellen oder Waben, die jeweils einen Teil der Füllstruktur 20 bilden und einen Teil des Freiraums 18 einschließen.

Vorliegend sind die Rahmenabschnitte 14a, b, mit anderen Worten die Seitenwände des Rahmens 12, additiv gefertigt. Die beiden Deckel 16a, b als Rahmenabschnitte 14c, d des Rahmens 12 sind dagegen nicht additiv gefertigt, sondern herkömmlich hergestellte Bleche. Somit sind hier bei der Herstellung des Untergestells 6 die Füllstrukturen 20 und die Rahmenabschnitte 14a, b additiv auf dem unteren Deckel 16a, der bereits vorab fertiggestellt wurde, aufgefertigt bzw. hier aufgedruckt. Und somit auf einem Teil des bereits vorab bestehenden Rahmens 12, nämlich dem Rahmenabschnitt 14c.

Die Gestellkomponente 8a weist ein Medienbehältnis 28 auf, hier einen Öltank. Mit anderen Worten ist der Öltank also in das Untergestell 6 integriert. Das Medienbehältnis 28 enthält einen Medienraum 30, hier ein Tankvolumen, welches mit Medium 32 (hier nur durch einen Pfeil symbolisch angedeutet) in Form von Öl befüllt werden kann bzw. im Betrieb der Anlage 2 befüllt wird / ist.

Der Medienraum 30 ist teilweise mit der Füllstruktur 20, nämlich entsprechenden Stegen 22 gefüllt. Auch eine Wand 34 des Medienbehältnisses 28 ist durch Teile der Füllstruktur 20 gebildet. Mit anderen Worten ist der Medienraum durch die Füllstruktur mit gebildet.

Insofern ist in Figur 1 eine innere Struktur (Füllstruktur 20) des Untergestells 6 mit integriertem Öltank (Medienbehältnis 28) dargestellt. Nur um die innere Struktur (Füllstruktur 20) für den Betrachter in der Figur 1 sichtbar zu machen, ist der Deckel 16b ausgeblendet bzw. nicht dargestellt. Bei dem Beispiel gemäß Figur 1 ist die Füllstruktur 20 stets gleich ausgeführt (regelmäßigen Wiederholung der Strukturelemente 24 in Form der oben erläuterten Zellen) und nicht für den Anwendungsfall der vorliegenden Anlage 2 optimiert. Mit anderen Worten werden auch andere Anlagen mit den gleichen Strukturelementen 24, gegebenenfalls in anderer Anordnung hergestellt.

Figur 1 zeigt damit Füllstrukturen 20 in einem Untergestell 6 mit Öltank in Form des Medienbehältnisses 28 ohne Deckel 16b, wobei die Füllstrukturen (Strukturelemente 22) stets gleich ausgeführt sind.

Bei einem Verfahren zum Herstellen des Untergestells 6 wird die Gestellkomponente 8a bereitgestellt, indem diese aus dem metallischen Material gefertigt wird. Dabei wird bei der Gestellkomponente 8 der Additivabschnitt 10 derart hergestellt, dass dieser zumindest teilweise anhand des additiven Fertigungsverfahrens hergestellt wird (wie oben erläutert, Füllstruktur 20 sowie Rahmenabschnitte 14a, b) Im Zuge dieser Herstellung wird bei dem Additivabschnitt 10 der jeweilige Rahmen 12 bereitgestellt (teils additiv mitgefertigt, teils vorher gefertigt und tatsächlich bereitgestellt) und die Füllstruktur 20 additiv gefertigt und dabei mit dem Rahmen 12 dauerhaft und fest verbunden. Dies geschieht teils auch im Zuge der gemeinsamen additiven Fertigung von Füllstruktur 20 und Teilen des Rahmens 12 (z.B. Rahmenabschnitte 12a, b) Dabei durchsetzt die Füllstruktur 20 den Freiraum 18.

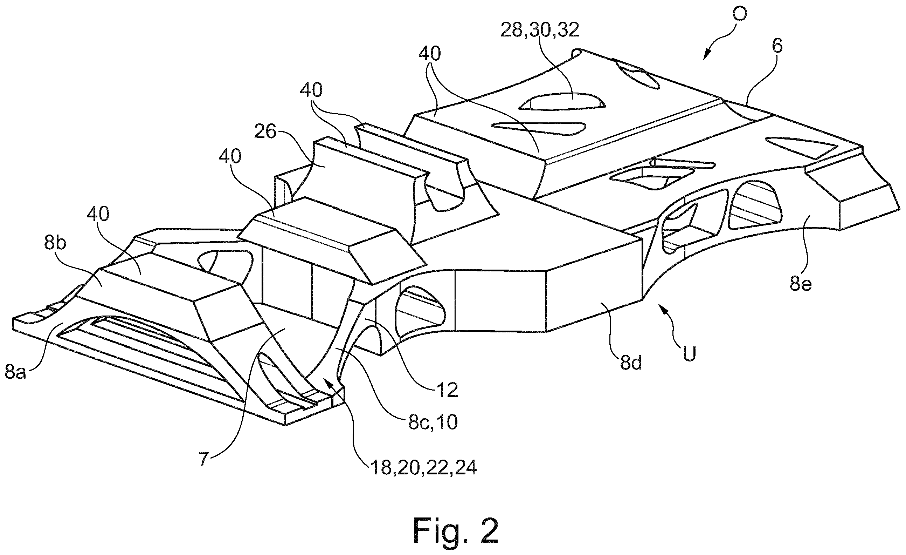

Figur 2 zeigt eine alternative Ausführungsform eines Untergestells 6, welches mehrere Gestellkomponenten 8a, b, c,... aufweist. Die Gestellkomponenten 8a, b, c,... sind in dem Montagezustand M miteinander verbunden.

Die Gestellkomponente 8c bildet hier wieder einen Additivabschnitt 10. Dieser dient im Montagezustand M als eine Versteifung und Verbindung zwischen den beiden Gestellkomponenten 8a, d.

In Figur 2 weist die Gestellkomponente 8d einen Klassikabschnitt 26 auf, der nicht anhand eines additiven Fertigungsverfahrens hergestellt ist. Hierbei handelt es sich um einen klassisch hergestellten massiven Metallblock.

Figur 2 zeigt damit ein alternatives Untergestell 6 einer nicht weiter dargestellten alternativen Anlage 2. Hierbei handelt es sich um ein strukturoptimiertes Untergestell 6, insbesondere hergestellt und gefüllt mit additiver Fertigung. Wie in der Ausführungsform nach Figur 1 ist auch hier die Außenhülle in Form des umgebenden Rahmens 12 komplett dicht ausgeführt. Das Innere des Untergestells 6 ist wieder teilweise (in der Figur nicht sichtbar) mit der Füllstruktur 20 nach Figur 1 gefüllt. Hier enthält das Untergestell 6 mehrere Gestellkomponenten 8a, b, c,..., welche teils getrennt voneinander hergestellt werden und erst nach deren (Teil-)herstellung zu dem Untergestell 6 fest und dauerhaft verbunden werden.

An der Oberseite O des Untergestells 6 befinden sich Lastpunkte 40 bzw. Lastflächen, an welchen nicht dargestellte Maschinen als Anlagenkomponenten 4a, b,... der Anlage 2 fest und dauerhaft am Untergestell 6 montiert sind.

Das komplette Untergestell 6 aus Figur 2 lässt sich additiv herstellen.

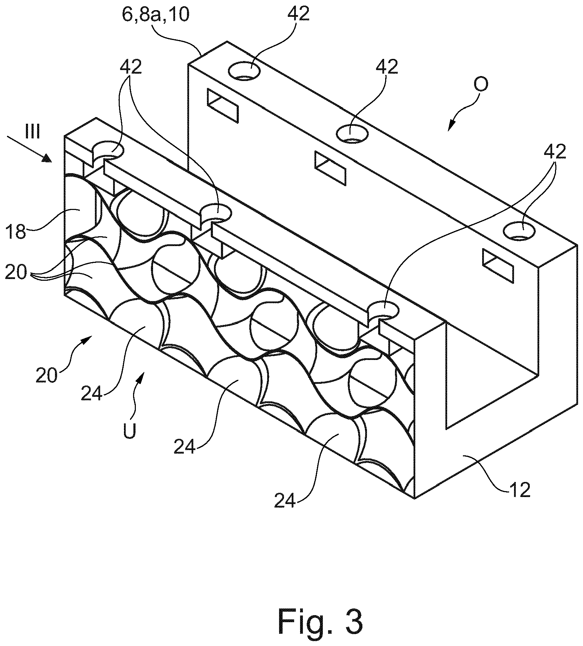

Figur 3 zeigt ein weiteres alternatives Untergestell 6 für eine nicht näher erläuterte und dargestellte Anlage 2, hier ein Maschinenuntergestell. Dieses ist an der Position des Pfeils III zu Darstellungszwecken geschnitten dargestellt. Eine Außenhülle in Form eines Rahmens 12 ist auch hier additiv gefertigt zusammen mit der Innenstruktur in Form der Füllstruktur 20. Alternativ kann der Rahmen 12 auch wieder aus vorab bereits fertig gestellten Blechen bestehen, in welche dann die Innenstruktur als Füllstruktur 20 eingedruckt wird. Die Untergestell 6 in Figur 3 verfügt über insgesamt sechs (hier nur beispielhaft dargestellt, es können z.B. auch mehr sein) Befestigungspunkte 42 zum Verschrauben einer nicht dargestellten Maschine.

Figur 3 zeigt damit ein mit Füllstruktur 20 verstärktes Maschinenuntergestell als Untergestell 6. Die Außenhülle, also der Rahmen 12 kann hier entweder zusammen mit der Innen- bzw. Füllstruktur 20 additiv gefertigt werden, oder auch aus Blechen bestehen, in denen die Innenstruktur / Füllstruktur 20 eingedruckt wird.

Damit sind verschiedene Ausführungsbeispiele für Untergestelle 6 anhand der Figuren 1 bis 3 näher beschrieben.

### Bezugszeichenliste

- 2: Anlage
- 4a-c: Anlagenkomponente
- 6: Untergestell
- 7: Durchbrechung
- 8a-e: Gestellkomponente
- 10: Additivabschnitt
- 12: Rahmen
- 14a-d: Rahmenabschnitt
- 16a, b: Deckel
- 18: Freiraum
- 20: Füllstruktur
- 22: Steg
- 24: Strukturelement
- 26: Klassikabschnitt
- 28: Medienbehältnis
- 30: Medienraum
- 32: Medium
- 40: Lastpunkt
- 42: Befestigungspunkt

- M: Montagezustand
- U: Unterseite
- O: Oberseite

## Patentansprüche

1. Untergestell (6) für eine Anlage (2), das dazu eingerichtet ist, dass wenigstens in einem Montagezustand (M) der Anlage (2) wenigstens eine Anlagenkomponente (4a-c) der Anlage (2) fest und dauerhaft an dem Untergestell (6) angebracht oder auf diesem aufgestellt ist,
- enthaltend wenigstens eine Gestellkomponente (8a-e),
- wobei jede der Gestellkomponenten (8a-e) aus wenigstens einem metallischen Material gefertigt ist,
- wobei wenigstens eine der Gestellkomponenten (8a-e) wenigstens einen Additivabschnitt (10) enthält, der zumindest teilweise anhand eines additiven Fertigungsverfahrens hergestellt ist,
- wobei wenigstens einer der Additivabschnitte (10) aufweist:
- einen Rahmen (12), der ausschließlich eine mechanische Schnittstelle des Additivabschnitts (10) zum restlichen Untergestell (6) darstellt, und
- einen Freiraum (18), und
- eine additiv gefertigte Füllstruktur (20), die mit dem Rahmen (12) dauerhaft und fest verbunden ist, und die den Freiraum (18) durchsetzt.

2. Untergestell (6) nach Anspruch 1,
**dadurch gekennzeichnet, dass**
bei wenigstens einer der Füllstrukturen (20) zumindest ein Teil der Füllstruktur (20) in Form von Stegen (22) ausgeführt ist.

3. Untergestell (6) nach einem der vorhergehenden Ansprüche,
**dadurch gekennzeichnet, dass**
bei wenigstens einer der Füllstrukturen (20) zumindest ein Teil der Füllstruktur (20) durch regelmäßig aneinandergereihte wiederkehrende Strukturelemente (24) gebildet ist.

4. Untergestell (6) nach einem der vorhergehenden Ansprüche,
**dadurch gekennzeichnet, dass**
bei wenigstens einem der Additivabschnitte (10) wenigstens ein Teil des Rahmens (12) additiv gefertigt ist.

5. Untergestell (6) nach einem der vorhergehenden Ansprüche,
**dadurch gekennzeichnet, dass**
bei wenigstens einem der Additivabschnitte (10) wenigstens ein Teil des Rahmens (12) nicht additiv gefertigt ist.

6. Untergestell (6) nach einem der vorhergehenden Ansprüche,
**dadurch gekennzeichnet, dass**
bei wenigstens einem der Additivabschnitte (10) wenigstens eine der Füllstrukturen (20) auf einem bereits vorab bestehenden Rahmen (12) additiv aufgefertigt ist.

7. Untergestell (6) nach einem der vorhergehenden Ansprüche,
**dadurch gekennzeichnet, dass**
das Untergestell (6) wenigstens zwei Gestellkomponenten (8a-e) enthält, die wenigstens in dem Montagezustand (M) miteinander verbunden sind.

8. Untergestell (6) nach Anspruch 7,
**dadurch gekennzeichnet, dass**
wenigstens einer der Additivabschnitte (10) zumindest im Montagezustand (M) als eine Versteifung und/oder Verbindung zwischen wenigstens zweien der Gestellkomponenten (8a-e) ausgeführt ist.

9. Untergestell (6) nach einem der vorhergehenden Ansprüche,
**dadurch gekennzeichnet, dass**
wenigstens eine der Gestellkomponenten (8a-e) wenigstens einen Klassikabschnitt (26) aufweist, der nicht anhand eines additiven Fertigungsverfahrens hergestellt ist.

10. Untergestell (6) nach einem der vorhergehenden Ansprüche,
**dadurch gekennzeichnet, dass**
wenigstens eine der Gestellkomponenten (8a-e) wenigstens ein Medienbehältnis (28) mit einem Medienraum (30) enthält, der zumindest im Montagezustand (M) mit einem Medium (32) befüllbar ist.

11. Untergestell (6) nach Anspruch 10,
**dadurch gekennzeichnet, dass**
wenigstens einer der Medienräume (30) zumindest teilweise mit wenigstens einer der Füllstrukturen (20) gefüllt ist.

12. Anlage (2), mit dem Untergestell (6) nach einem der vorhergehenden Ansprüche und mit der wenigstens einen Anlagenkomponente (4a-c), wobei wenigstens in dem Montagezustand (M) der Anlage (2) wenigstens eine der Anlagenkomponenten (4a-c) fest und dauerhaft an dem Untergestell (6) angebracht ist.

13. Verfahren zum Herstellen des Untergestells (6) nach einem der Ansprüche 1 bis 11, bei dem:
- wenigstens eine Gestellkomponente (8a-e) bereitgestellt,
- jede der Gestellkomponenten (8a-e) aus wenigstens einem metallischen Material gefertigt wird,
- wobei bei wenigstens einer der Gestellkomponenten (8a-e) wenigstens ein Additivabschnitt (10) derart hergestellt wird, dass dieser zumindest teilweise anhand eines additiven Fertigungsverfahrens hergestellt wird,
- wobei bei wenigstens einem der Additivabschnitte (10):
- der Rahmen (12) und
- der Freiraum (18) bereitgestellt wird, und
- die Füllstruktur (20) additiv gefertigt und mit dem Rahmen (12) dauerhaft und fest verbunden wird, und die Füllstruktur (20) derart gefertigt wird, dass sie den Freiraum (18) durchsetzt.
